# EUROPÄISCHE PATENTSCHRIFT

(11) **EP 0 614 519 B1**
(45) Veröffentlichungstag und Bekanntmachung des Hinweises auf die Patenterteilung: **15.10.1997**
(21) Anmeldenummer: 93920790.8
(22) Anmeldetag: 21.09.1993
(51) Int. Cl.: G01F 23/28, G01F 25/00

(54) **VORRICHTUNG ZUR FESTSTELLUNG UND/ODER ÜBERWACHUNG EINES VORBESTIMMTEN FÜLLSTANDS IN EINEM BEHÄLTER**
DEVICE FOR DETERMINING AND/OR MONITORING A PREDETERMINED LEVEL OF CONTENTS OF A CONTAINER
DISPOSITIF DE DETECTION ET/OU DE CONTROLE D'UN NIVEAU PREDETERMINE DANS UN RESERVOIR

(30) Priorität: 29.09.1992 DE 4232659
(43) Veröffentlichungstag der Anmeldung: 14.09.1994
(73) Patentinhaber: ENDRESS + HAUSER GMBH + CO., D-79689 Maulburg (DE)
(72) Erfinder: DREYER, Volker, D-79541 Lörrach (DE); SCHROCK, Arthur, D-79585 Steinen (DE); PFÄNDLER, Martin, D-79689 Maulburg (DE)
(74) Vertreter: Leiser, Gottfried, Dipl.-Ing.
(86) Internationale Anmeldenummer: EP9302557
(87) Internationale Veröffentlichungsnummer: WO9408215

(56) Entgegenhaltungen:
- EP-A- 0 212 045
- WO-A-83/04435
- WO-A-88/01150
- WO-A-89/04089
- FR-A- 2 553 189
- US-A- 3 943 440

## Beschreibung

Die Erfindung betrifft eine Vorrichtung zur Feststellung und/ oder Überwachung eines vorbestimmten Füllstands in einem Behälter, mit einem Sensor, der auf der Höhe des zu überwachenden Füllstands so am Behälter angeordnet ist, daß er mit dem Füllgut in Berührung kommt, wenn dieses den vorbestimmten Füllstand erreicht, einer Erregungsanordnung, die den Sensor zu mechanischen Schwingungen bei seiner Eigenresonanzfrequenz anregt, und mit einer Auswerteschaltung zur Auslösung von Anzeige- und/oder Schaltvorgängen in Abhängigkeit davon, ob die Frequenz der mechanischen Schwingungen des Sensors eine Schaltfrequenz über- oder unterschreitet.

Eine Vorrichtung dieser Art ist beispielsweise aus der DE-PS 33 36 991 bekannt. Bei dieser bekannten Vorrichtung weist der Sensor zwei Schwingstäbe auf, die im Abstand nebeneinander an einer Membran befestigt sind und durch die Erregungsanordnung in gegensinnige Schwingungen quer zu ihrer Längsrichtung versetzt werden. Es sind jedoch auch Vorrichtungen dieser Art bekannt, bei denen der Sensor nur einen einzigen Schwingstab aufweist oder in anderer Weise ganz ohne Schwingstäbe ausgebildet ist. In allen Fällen beruht die Funktionsweise der Vorrichtung darauf, daß sich die Eigenresonanzfrequenz des Sensors ändert, wenn der Sensor mit dem Füllgut in Berührung kommt. Wenn der Sensor von dem Füllgut bedeckt ist, ist seine Eigenresonanzfrequenz niedriger als wenn der Sensor von dem Füllgut frei ist. Die Schaltfrequenz wird so gewählt, daß sie zwischen der niedrigeren Eigenresonanzfrequenz bei bedecktem Sensor und der höheren Eigenresonanzfrequenz bei freiem Sensor liegt. Wenn die Auswerteschaltung feststellt, daß die Schwingungsfrequenz des Sensors unter der Schaltfrequenz liegt, ist dies ein Anzeichen dafür, daß der Sensor von dem Füllgut bedeckt ist, also der Füllstand im Behälter über der zu überwachenden Höhe liegt. Stellt die Auswerteschaltung dagegen fest, daß die Schwingungsfrequenz des Sensors über der Schaltfrequenz liegt, ist dies ein Anzeichen dafür, daß der Sensor von dem Füllgut frei ist, also der Füllstand im Behälter unter der zu überwachenden Höhe liegt. Sensoren dieser Art eignen sich insbesondere für die Überwachung des Füllstands von Flüssigkeiten, da bei diesen die Änderung der Eigenresonanzfrequenz beim Wechsel vom freien zum bedeckten Zustand und umgekehrt stets deutlich feststellbar ist.

Fertigungsbedingt ist die Resonanzfrequenz der Sensoren unterschiedlich. Da andererseits insbesondere bei Flüssigkeiten geringer Dichte die Eigenresonanzfrequenzen des bedeckten und des freien Sensors verhältnismäßig nahe beieinanderliegen können, muß die Schaltfrequenz für jeden Sensor individuell eingestellt werden. Die Auswerteschaltung ist dann zwingend mit dem Sensor gepaart; wenn sie in Verbindung mit einem anderen Sensor verwendet werden soll, muß sie auf diesen anderen Sensor neu abgestimmt werden, wozu die Eigenresonanzfrequenz des anderen Sensors bekannt sein muß. Diese Abstimmung kann gewöhnlich nicht ohne weiteres am Verwendungsort der Vorrichtung vorgenommen werden. Dies erschwert die Durchführung von Reparatur- und Wartungsarbeiten an der Vorrichtung.

In der EP-A-0 212 045 ist bereits eine Vorrichtung zur automatischen Anpassung des Meßbereichs eines Anzeige- oder Auswertegeräts an den Bereich von Ausgangsspannungen eines Sensors für eine physikalische Größe beschrieben, bei der dem Sensor ein Erkennungswiderstand zugeordnet ist, dessen Widerstandswert in eindeutiger Beziehung zu dem Ausgangsspannungsbereich des Sensors steht. In dem Anzeige- oder Auswertegerät wird der Meßbereich in Abhängigkeit von dem Widerstandswert des Erkennungswiderstands so eingestellt, daß er an den Ausgangsspannungsbereich des Sensors angepaßt ist. Auf diese Weise können verschiedene Sensoren mit dem gleichen Gerät verbunden werden, wobei der Meßbereich des Geräts automatisch an den jeweiligen Sensor angepaßt wird. Zur Anpassung dienen einige im Gerät vorgesehene Anpaßwiderstände, von denen einer oder mehrere in Abhängigkeit von dem Widerstandswert des Erkennungswiderstands eingeschaltet werden. Anstelle des Erkennungswiderstands können dem Sensor auch Codierungsschalter zugeordnet sein, wobei dann im Gerät ein entsprechender Decoder vorgesehen ist, der für die Einschaltung der Anpaßwiderstände sorgt.

Diese bekannte Vorrichtung bietet jedoch keine Lösung des Problems der Anpassung der Schaltfrequenz einer Auswerteschaltung an Sensoren mit unterschiedlichen Eigenresonanzfrequenzen.

Aufgabe der Erfindung ist die Schaffung einer Vorrichtung der eingangs angegebenen Art, bei der mit geringem Aufwand die Schaltfrequenz der Auswerteschaltung automatisch in Abhängigkeit von der Eigenresonanzfrequenz des Sensors so eingestellt wird, daß eine zuverlässige Aussage darüber erhalten wird, ob der vorbestimmte Füllstand im Behälter erreicht ist oder nicht.

Nach der Erfindung wird diese Aufgabe dadurch gelöst, daß dem Sensor ein elektrisches Schaltungselement zugeordnet ist, das eine Kenngröße hat, deren Wert in eindeutiger Beziehung zur Eigenresonanzfrequenz des Sensors steht, daß die Auswerteschaltung eine Anordnung zur Umsetzung der Frequenz der mechanischen Schwingungen des Sensors in eine erste digitale Zahl, eine Anordnung zur Umsetzung des Wertes der Kenngröße des Schaltungselements in eine zweite digitale Zahl sowie eine Addierschaltung enthält, die durch Addition einer festen Grundzahl zu der zweiten digitalen Zahl eine Summenzahl bildet, die die Schaltfrequenz angibt, und daß die Auswerteschaltung einen Vergleicher enthält, der an einem ersten Eingang die erste digitale Zahl und an einem zweiten Eingang die zweite digitale Zahl empfängt und an seinem Ausgang ein Sensorzustandssignal liefert, das in Abhängigkeit vom Ergebnis des Vergleichs der beiden digitalen Zahlen den einen oder den anderen von zwei Signalwerten annimmt.

Bei der Herstellung der erfindungsgemäßen Vorrichtung werden alle Auswerteschaltungen gleich ausgebildet. Für jeden Sensor wird dessen Eigenresonanzfrequenz im freien Zustand gemessen und der Wert der Kenngröße des elektrischen Schaltungselements in Abhängigkeit von der gemessenen Eigenresonanzfrequenz eingestellt. Das Schaltungselement wird dem Sensor bleibend zugeordnet, beispielsweise in einem Einschraubstück des Sensors untergebracht. Das Schaltungselement ist mit der Auswerteschaltung so verbunden, daß zur Auswerteschaltung ein elektrisches Signal geliefert wird, das den Wert der Kenngröße des Schaltungselements angibt. Die Auswerteschaltung erzeugt aufgrund dieses Signals eine digitale Zahl, die die dem speziellen Sensor zugeordnete Schaltfrequenz angibt. Durch Vergleich dieser digitalen Zahl mit einer weiteren digitalen Zahl, die in der Auswerteschaltung aus dem Sensorsignal gebildet wird und die Augenblicksfrequenz des Sensors angibt, läßt sich auf einfache Weise feststellen, ob die Sensorfrequenz über oder unter der Schaltfrequenz liegt, wodurch wiederum angezeigt wird, ob der vorbestimmte Füllstand im Behälter über- oder unterschritten ist.

Auf diese Weise kann jede Auswerteschaltung mit jedem Sensor kombiniert werden, ohne daß besondere Einstellungen zur Anpassung der Auswerteschaltung an den Sensor vorgenommen werden müssen. Ferner kann eine Auswerteschaltung in Verbindung mit mehreren Sensoren verwendet werden, die der Reihe nach von der Auswerteschaltung abgefragt werden. Bei jeder Abfrage wird dann die Schaltfrequenz in der Auswerteschaltung automatisch an den gerade abgefragten Sensor angepaßt. Die Auswertung des Sensorsignals und des den Wert der Kenngröße anzeigenden Signals durch Umsetzung dieser Signale in digitale Zahlen ermöglicht die Feststellung und/oder Überwachung des Füllstands auf besonders einfache Weise.

Vorteilhafte Ausgestaltungen und Weiterbildungen der Erfindung sind in den Unteransprüchen gekennzeichnet.

Weitere Merkmale und Vorteile der Erfindung ergeben sich aus der folgenden Beschreibung eines Ausführungsbeispiels an Hand der Zeichnungen. In den Zeichnungen zeigen:

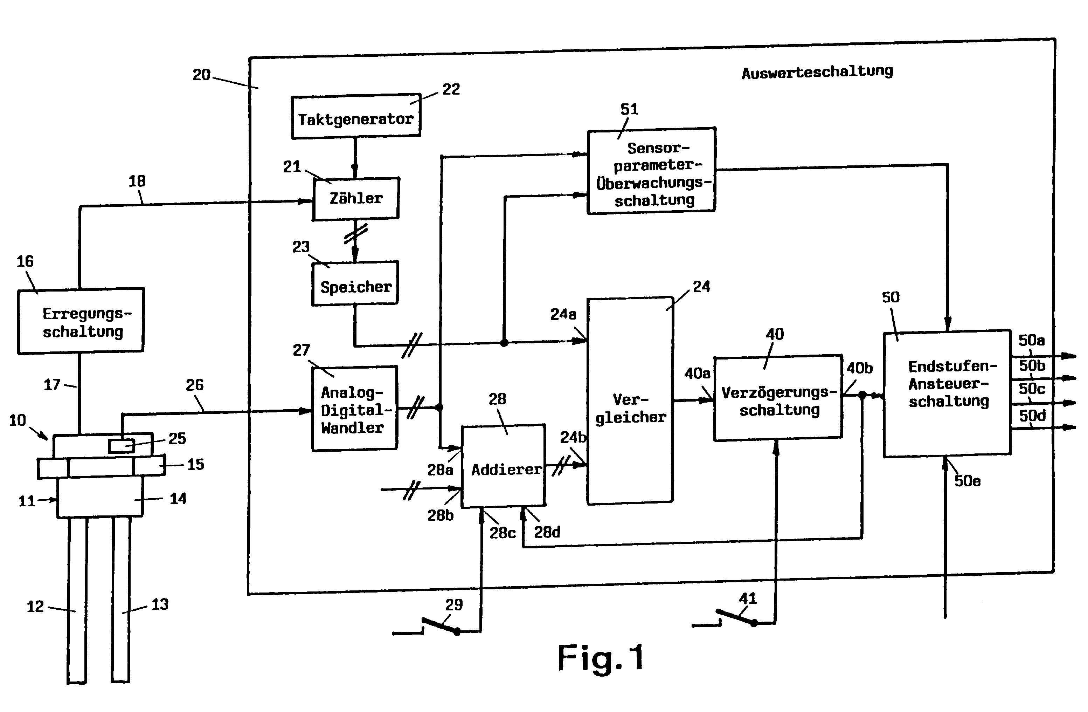

- Fig. 1: das Schaltschema einer Vorrichtung nach der Erfindung,
- Fig. 2, 3 und 4: verschiedene Beispiele des dem Sensor zugeordneten Schaltungselements und dessen Verbindung mit der Auswerteschaltung,
- Fig. 5: ein Ausführungsbeispiel der in der Auswerteschaltung von Fig. 1 enthaltenen Verzögerungsschaltung und
- Fig. 6: Diagramme zur Erläuterung der Funktionsweise der Verzögerungsschaltung von Fig. 5.

Die Zeichnung zeigt einen Sensor 10 mit zwei von einem Einschraubstück 11 getragenen parallelen Schwingstäben 12 und 13. Das Einschraubstück 11 hat einen Gewindeabschnitt 14 und einen Sechskantkopf 15. Der Gewindeabschnitt 14 wird in eine mit einem Innengewinde versehene Öffnung in der Wand eines Behälters so eingeschraubt, daß die Schwingstäbe 12 und 13 in das Innere des Behälters ragen. Der Sechskantkopf 15 dient zum Ansetzen eines Schraubenschlüssels, mit dem das Einschraubstück 11 gegen die Behälterwand festgezogen werden kann. Die Öffnung ist in der Behälterwand auf solcher Höhe angebracht, daß die Schwingstäbe 12, 13 von dem im Behälter befindlichen Füllgut bedeckt sind, wenn der Füllstand im Behälter eine vorbestimmte Höhe übersteigt, während sie vom Füllgut frei sind, wenn der Füllstand unter der vorbestimmten Höhe liegt. Die Einbaulage der Vorrichtung ist beliebig; die Schwingstäbe können vertikal liegen, wenn die Öffnung in der oberen Behälterwand angebracht ist, oder sie können horizontal liegen, wenn die Öffnung in einer Seitenwand des Behälters angebracht ist.

Das Einschraubstück 11 ist hohl und enthält im Innern eine Wandleranordnung, die bei Zuführung einer elektrischen Wechselspannung die Schwingstäbe 12, 13 in gegensinnige Schwingungen quer zu ihrer Längsrichtung versetzt. Die Wechselspannung wird von einer Erregungsschaltung 16 geliefert, die über eine Leitung 17 mit der Wandleranordnung verbunden und so ausgebildet ist, daß sie das aus den Schwingstäben 12, 13 und der Wandleranordnung gebildete mechanische Schwingungssystem zu Schwingungen bei seiner Eigenresonanzfrequenz anregt. Ein derart ausgebildeter Sensor, bei dem die Wandleranordnung durch piezoelektrische Elemente gebildet ist, ist beispielsweise aus der DE-PS 33 36 991 bekannt; die Wandleranordnung wird deshalb hier nicht in näheren Einzelheiten beschrieben.

Ein Ausgang der Erregungsschaltung 16 ist über eine Leitung 18 mit einem Eingang einer Auswerteschaltung 20 verbunden. An diesem Ausgang gibt die Erregungsschaltung ein Signal mit der Frequenz der Schwingungen des Sensors 10 ab. Diese Frequenz, die nachfolgend Sensorfrequenz genannt wird, liegt in der Größenordnung von 200 bis 500 Hz. Die Auswerteschaltung 20 prüft, ob die Sensorfrequenz über oder unter einer vorgegebenen Schaltfrequenz liegt, um festzustellen, ob die Schwingstäbe 12, 13 des Sensors 10 von dem Füllgut bedeckt sind oder nicht. Die Eigenresonanzfrequenz, mit der die Schwingstäbe 12 und 13 schwingen, ist nämlich höher, wenn die Schwingstäbe in Luft schwingen, und niedriger, wenn die Schwingstäbe von dem Füllgut bedeckt sind.

Die Auswerteschaltung 20 enthält einen Zähler 21, der an einem Steuereingang das von der Erregungsschaltung 16 gelieferte Signal mit der Sensorfrequenz empfängt. Ein Takteingang des Zählers 21 empfängt Taktimpülse, die von einem Taktgenerator 22 geliefert werden. Die Frequenz dieser Taktimpulse ist sehr groß gegen die Sensorfrequenz; sie liegt beispielsweise in der Größenordnung von 500 kHz.Der Zähler 21 wird durch das über die Leitung 18 an seinen Steuereingang angelegte Signal so gesteuert, daß er jeweils während einer Periode dieses Signals die vom Taktgenerator 22 gelieferten Taktimpulse zählt. Der am Ende einer Periode erreichte Zählerstand wird in einen Speicher 23 übertragen, worauf der Zähler 21 auf Null zurückgestellt wird und eine neue Zählung der Taktimpulse während einer Periode des Sensorsignals durchführt. Die im Speicher 23 stehende digitale Zahl ist somit stets der Periodendauer des Sensorsignals proportional und daher ein Maß für die Sensorfrequenz.

Die im Speicher 23 stehende digitale Zahl wird einem Eingang 24a eines Vergleichers 24 zugeführt, der an einem zweiten Eingang 24b eine digitale Zahl empfängt, die in gleicher Weise die Periodendauer der Schaltfrequenz angibt. Der Vergleicher 24 gibt an seinem Ausgang ein binäres Signal ab, das den einen Signalwert (beispielsweise den Signalwert "H") hat, wenn die dem Eingang 24a zugeführte digitale Zahl kleiner als die dem Eingang 24b zugeführte digitale Zahl ist, und das den anderen Signalwert (beim angegebenen Beispiel den Signalwert "L") hat, wenn die dem Eingang 24a zugeführte digitale Zahl größer als die dem Eingang 24b zugeführte digitale Zahl ist.

Demzufolge zeigt bei dem gewählten Beispiel der Signalwert "H" des Ausgangssignals des Vergleichers 24 an, daß die Sensorfrequenz höher als die Schaltfrequenz ist, und der Signalwert "L" zeigt an, daß die Sensorfrequenz niedriger als die Schaltfrequenz ist. Wenn die Schaltfrequenz für den angeschlossenen Sensor 10 richtig eingestellt ist, zeigt somit der Signalwert "H" an, daß die Schwingstäbe des Sensors 10 in Luft schwingen, also der zu überwachende Füllstand nicht erreicht ist, und der Signalwert "L" zeigt an, daß die Schwingstäbe des Sensors von dem Füllgut bedeckt sind, also der zu überwachende Füllstand erreicht oder überschritten ist.

Wenn die Schaltfrequenz für einen bestimmten Sensor auf den richtigen Wert fest eingestellt wird, kann es sein, daß die Auswerteschaltung nicht mehr richtig funktioniert, wenn der Sensor gegen einen anderen Sensor ausgetauscht wird, der fertigungsbedingt eine andere Eigenresonanzfrequenz hat. Wenn beispielsweise die Eigenresonanzfrequenz bei unbedeckten Schwingstäben so niedrig ist, daß sie unter der Schaltfrequenz liegt, würde das Ausgangssignal des Vergleichers immer den Zustand "bedeckt" anzeigen, und wenn die Eigenresonanzfrequenz des Sensors so hoch ist, daß sie auch bei bedeckten Schwingstäben noch über der Schaltfrequenz liegt, würde das Ausgangssignal des Vergleichers immer den Zustand "frei" anzeigen.

Bei der in der Zeichnung dargestellten Vorrichtung erfolgt eine selbsttätige Anpassung der Schaltfrequenz an den jeweils angeschlossenen Sensor. Zu diesem Zweck ist dem Sensor 10 ein elektrisches Schaltungselement 25 zugeordnet, das eine Kenngröße hat, die in eindeutiger Beziehung zur Eigenresonanzfrequenz des Sensors 10 steht. Das Schaltungselement 25 ist, wie in der Zeichnung symbolisch angedeutet ist, vorzugsweise im Einschraubstück 11 des Sensors 10 untergebracht und über eine Leitung 26 mit einem zweiten Eingang der Auswerteschaltung 20 verbunden. Die Auswerteschaltung 20 empfängt über die Leitung 26 ein elektrisches Signal, das den Wert der Kenngröße des Schaltungselements 25 angibt. Wenn dieses elektrische Signal ein Analogsignal ist, wird es in der Auswerteschaltung 20 einem Analog-Digital-Wandler 27 zugeführt, der das Analogsignal in eine digitale Zahl umsetzt, beispielsweise in eine 8 Bit-Zahl. Diese digitale Zahl wird dem einen Eingang 28a eines Addierers 28 zugeführt, der an seinem zweiten Eingang 28b eine fest eingestellte digitale Grundzahl empfängt. Der Addierer 28 bildet die Summe der den beiden Eingängen zugeführten Zahlen und gibt an seinem Ausgang eine diese Summe darstellende digitale Zahl ab, die dem zweiten Eingang 24b des Vergleichers 24 zugeführt wird und die Schaltfrequenz angibt, mit der die vom Inhalt des Speicher 23 angegebene Sensorfrequenz verglichen wird.

Die dem Eingang 28b zugeführte digitale Grundzahl bestimmt den Abstand zwischen der Schaltfrequenz und der Eigenresonanzfrequenz des Sensors und damit die Ansprechempfindlichkeit der Vorrichtung. Sie wird beispielsweise für Wasser und Flüssigkeiten ähnlicher Dichte so eingestellt, daß die Schaltfrequenz 11% unter der Eigenresonanzfrequenz liegt, mit der der Sensor im freien Zustand schwingt. Durch Schließen eines Schalters 29 kann einem Steuereingang 28c des Addierers 28 ein Signal zugeführt werden, das die im Addierer 28 hinzuaddierte Zahl verändert. Dadurch wird der Abstand zwischen der Eigenresonanzfrequenz des Sensors und der Schaltfrequenz verändert, um die Ansprechempfindlichkeit der Vorrichtung an Füllgüter anderer Dichte anzupassen. Wenn, wie oben angegeben, die dem Eingang 28b zugeführte digitale Grundzahl so bemessen ist, daß bei geöffnetem Schalter 29 die Schaltfrequenz 11% unter der Eigenresonanzfrequenz des unbedeckten Sensors liegt, kann es bei der Überwachung des Füllstands von Flüssigkeiten geringerer Dichte vorkommen, daß sich die Schwingungsfrequenz des bedeckten Sensors nicht um 11% gegenüber der Schwingungsfrequenz des unbedeckten Sensors verringert. In diesem Fall würde der Vergleicher 24 kein Signal abgeben, das das Erreichen des zu überwachenden Füllstands anzeigt. Durch Schließen des Schalters 29 wird in diesem Fall beispielsweise bewirkt, daß die Schaltfrequenz nur 5% unter der Eigenresonanzfrequenz des unbedeckten Sensors liegt.

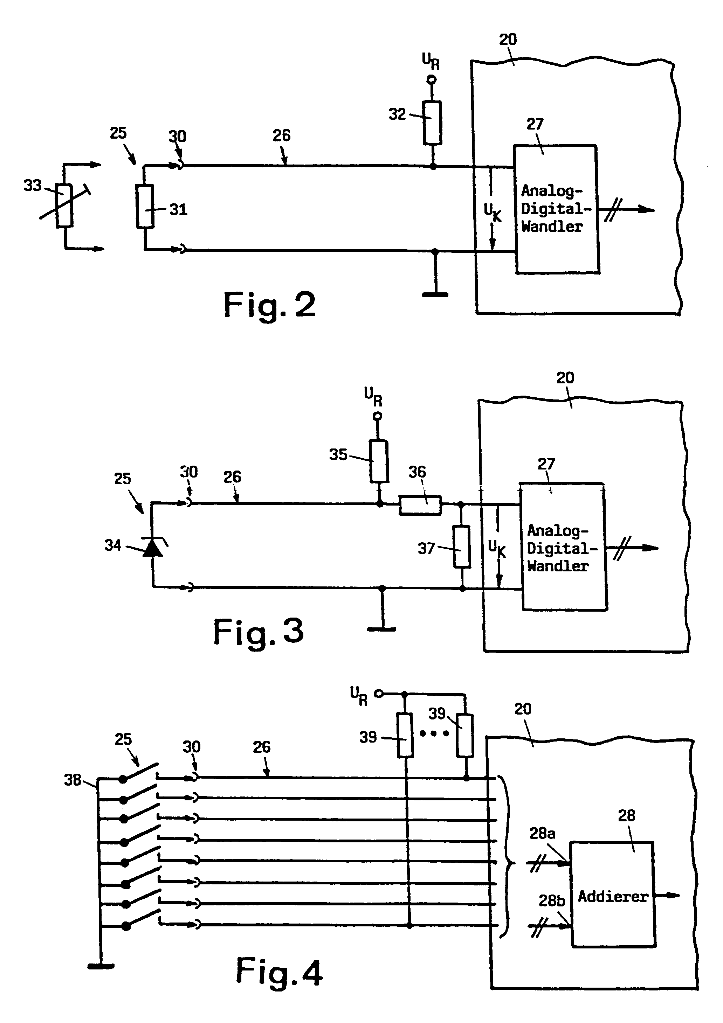

Für das elektrische Schaltungselement 25 wird vorzugsweise ein passives Schaltungselement verwendet, das keine eigene Stromversorgung im Sensor erfordert. In den Figuren 2, 3 und 4 sind einige Beispiele geeigneter Schaltungselemente dargestellt. Diese Figuren zeigen auch jeweils einen Teil der Auswerteschaltung 20 sowie die Verbindungsleitung 26 zwischen dem Schaltungselement 25 und der Auswerteschaltung 20.

Üblicherweise ist die Auswerteschaltung 20 zusammen mit der Erregungsschaltung 16 in einem Elektronikgehäuse untergebracht, das unmittelbar auf das Einschraubstück 11 des Sensors 10 aufgesetzt werden kann. Beim Aufsetzen wird einerseits die Verbindung zwischen der Erregungsschaltung 16 und der im Einschraubstück 11 angeordneten elektromechanischen Wandleranordnung und andererseits die Verbindung zwischen der Auswerteschaltung 20 und dem Schaltungselement 25 hergestellt. Dies geschieht vorzugsweise durch Steckverbindungsteile, die einerseits am Einschraubstück 11 und andererseits am Elektronikgehäuse angebracht sind. Je nach den Einbau- oder Umgebungsbedingungen kann es jedoch auch erforderlich sein, die Elektronik in größerer Entfernung vom Sensor 11 anzuordnen; in diesem Fall haben die Leitungen 17 und 26 eine entsprechend größere Länge, doch sind auch in diesem Fall Steckverbindungsteile oder ähnliche Verbindungsmittel vorgesehen, die ein einfaches und schnelles Herstellen und Lösen der Verbindungen ermöglichen. In beiden Fällen ergibt sich der Vorteil, daß die Elektronik, beispielsweise im Falle einer Störung, leicht und schnell ausgetauscht werden kann, ohne daß der Sensor hierzu ausgebaut werden muß. Als Verbindungsmittel sind in den Figuren 2 bis 4 Steckverbindungen 30 angedeutet.

Fig. 2 zeigt die bevorzugte Ausführungsform, bei der das elektrische Schaltungselement 25 ein Festwiderstand 31 ist und die Kenngröße, die in eindeutiger Beziehung zur Eigenresonanzfrequenz des Sensors steht, der Widerstandswert des Festwiderstands 31 ist. Die Leitung 26 ist in diesem Fall eine Doppelleitung, von der ein Leiter an Masse liegt und der andere Leiter über einen Vorwiderstand 32 an eine Referenzspannung U_{R} gelegt ist. Das elektrische Signal, das den Wert der Kenngröße angibt, ist in diesem Fall eine Analogspannung U_{K}, nämlich der Spannungsabfall am Festwiderstand 31. Diese Analogspannung U_{K} wird in der Auswerteschaltung 20 dem Analog-Digital-Wandler 27 zugeführt und von diesem in der zuvor beschriebenen Weise in eine digitale Zahl umgesetzt.

Bei der Herstellung jedes Sensors muß also dessen Eigenresonanzfrequenz im freien Zustand gemessen und ein Festwiderstand 31 mit einem solchen Widerstandswert ausgewählt werden, daß nach Umsetzung dieses Widerstandswerts in das über die Leitung 26 übertragene Analogsignal, Umwandlung des Analogsignals in eine digitale Zahl und Addition dieser digitalen Zahl zu der fest eingestellten Grundzahl eine digitale Zahl erhalten wird, die die Schaltfrequenz in der gleichen Weise ausdrückt, wie die im Speicher 23 gespeicherte Zahl die Sensorfrequenz nach deren Erfassung im Zähler 21. Da alle diese Vorgänge genau festgelegt und bekannt sind, bietet die Auswahl eines Festwiderstands mit dem richtigen Widerstandswert dem Fachmann keine Schwierigkeiten. Festwiderstände mit ausreichend feiner Abstufung der Widerstandswerte sind im Handel erhältlich. Vorzugsweise werden Metallschichtwiderstände verwendet, die sich durch hohe Präzision und geringe Temperaturabhängigkeit auszeichnen.

In Fig. 2 ist angedeutet, daß anstelle eines Festwiderstands 31 auch ein einstellbarer Widerstand 33 verwendet werden kann. Der einstellbare Widerstand 33 kann ein Trimmwiderstand sein, dessen Widerstandswert durch Verdrehen eines Abgriffs einstellbar ist, oder auch ein Schichtwiderstand, dessen Widerstandswert durch Bearbeiten der Widerstandsschicht einstellbar ist. Diese Möglichkeiten sind dem Fachmann geläufig.

Fig. 3 zeigt als weiteres Beispiel für das elektrische Schaltungselement 25 die Verwendung einer Zener-Diode 34. In diesem Fall ist die Kenngröße, die in eindeutiger Beziehung zur Eigenresonanzfrequenz des Sensors steht, die Zener-Spannung der Zener-Diode. Auch Zener-Dioden sind mit ausreichend feiner Abstufung der Zener-Spannung im Handel erhältlich. Die Leitung 26 ist bei Verwendung einer Zener-Diode wiederum eine Doppelleitung, von der ein Leiter an Masse liegt und der andere Leiter über einen Vorwiderstand 35 an eine Referenzspannung UR gelegt ist. Parallel zur Zener-Diode 34 liegt ein Spannungsteiler aus zwei Widerständen 36 und 37. Das die Kenngröße repräsentierende elektrische Signal ist wieder eine Analogspannung Uₖ, die dem Eingang des Analog-Digital-Wandlers 27 zugeführt wird. Diese Analogspannung U_{K} entspricht der im Teilerverhältnis des Spannungsteilers 36-37 verringerten Zener-Spannung der Zener-Diode 34. Die Verwendung einer Zener-Diode anstelle eines Festwiderstands ergibt den Vorteil, daß die Analogspannung U_{K} unabhängig von Schwankungen der Referenzspannung U_{R} ist.

Während bei den zuvor beschriebenen Ausführungsbeispielen das die Kenngröße repräsentierende elektrische Signal ein Analogsignal ist, zeigt Fig. 4 ein Beispiel für den Fall, daß das die Eigenresonanzfrequenz repräsentierende elektrische Signal, das über die Leitung 26 zur Auswerteschaltung 20 übertragen wird, ein digitales Signal ist. Das Schaltungselement 25 ist bei diesem Beispiel ein Mehrfachschalter 38 mit einer der Bit-Zahl einer einzustellenden digitalen Zahl entsprechenden Anzahl von Schaltkontakten. In Fig. 4 ist angenommen, daß der Schalter 38 acht Schaltkontakte enthält, was die Einstellung einer achtstelligen Binärzahl ermöglicht. Solche Schalter sind in Miniaturausführung als sogenannte Dual-In-Line-Schalter im Handel erhältlich. Die Leitung 26 enthält in diesem Fall für jeden Schaltkontakt des Schalters 38 einen eigenen Leiter, bei dem angegebenen Beispiel also acht Leiter. Jeder Leiter ist über einen Widerstand 39 an eine Referenzspannung U_{R} gelegt; in Fig. 4 sind zur Vereinfachung nur die Widerstände 39 des ersten und des letzten Leiters dargestellt. Wenn der einem Leiter zugeordnete Schaltkontakt offen ist, führt der Leiter das Potential der Referenzspannung U_{R}; ist der Schaltkontakt geschlossen, führt der Leiter das Massepotential. Bei diesem Beispiel entfällt der Analog-Digital-Wandler 27 in der Auswerteschaltung 20, und die Leiter der Leitung 26 sind unmittelbar mit den Eingängen 28a des Addierers 28 verbunden, an die bei den Ausführungsbeispielen von Fig. 2 und 3 die Ausgänge des Analog-Digital-Wandlers 27 angeschlossen sind. Die Schaltkontakte des Schalters 38 werden so eingestellt, daß sie die Eigenresonanzfrequenz des Sensors durch die gleiche digitale Zahl repräsentieren, wie sie bei den Ausführungsbeispielen von Fig. 2 und 3 infolge der Umsetzung der Analogspannung U_{K} vom Analog-Digital-Wandler 27 abgegeben wird. Die Kenngröße des Schaltungselements 25, die in eindeutiger Beziehung zur Eigenresonanzfrequenz des Sensors steht, ist in diesem Fall die Einstellung der Schaltkontakte des Schalters 38.

Jeder in der beschriebenen Weise mit einem Schaltungselement 25 ausgestattete Sensor 10 kann mit der gleichen Auswerteschaltung 20 kombiniert werden, wobei die sensorspezifische Schaltfrequenz automatisch eingestellt wird. Ein werkseitiger Abgleich der Elektronik zur Anpassung an einen bestimmten Sensor ist nicht erforderlich.

Das Ausgangssignal des Vergleichers 24 stellt ein unverzögertes Sensorzustandssignal dar, das anzeigt, ob der Sensor "frei" oder "bedeckt" ist. Dieses Sensorzustandssignal wird dem Eingang 40a einer Verzögerungsschaltung 40 zugeführt, an deren Ausgang 40b eine Endstufen-Ansteuerschaltung 50 angeschlossen ist. Die Endstufen-Ansteuerschaltung 50 ermöglicht es, verschiedene Endstufen durch das verzögerte Sensorzustandssignal anzusteuern. Beispielsweise kann ein Ausgang 50a der Endstufen-Ansteuerschaltung 50 eine Wechselspannungs-Endstufe ansteuern, die ein vom Sensorzustandssignal abhängiges Wechselspannungssignal liefert, ein Ausgang 50b kann eine Gleichspannungs-Endstufe ansteuern, ein Ausgang 50c eine Pulsfrequenzmodulations-Endstufe und ein Ausgang 50d eine Relais-Endstufe, die in Abhängigkeit vom Sensorzustandssignal ein Relais betätigt. Durch ein Betriebsart-Steuersignal, das einem Steuereingang 50e der Endstufen-Ansteuerschaltung 50 zugeführt wird, wird bestimmt, welche der Endstufen angesteuert wird.

Durch die Verzögerung des Sensorzustandssignals in der Verzögerungsschaltung 40 wird erreicht, daß die Endstufen-Ansteuerschaltung 50 nicht sofort auf die Zustandsänderungen des Sensorzustandssignals anspricht, sondern erst dann, wenn das Sensorzustandssignal seinen Zustand für eine gewisse Zeit beibehalten hat. Dadurch wird verhindert, daß durch sporadische Störungen Schaltvorgänge oder Anzeigen ausgelöst werden.

Durch ein Steuersignal, das einem Steuereingang der Verzögerungsschaltung 40 über einen Schalter 41 zugeführt wird, kann die Funktion der Vorrichtung von der Überwachung eines maximalen Füllstands auf die Überwachung eines minimalen Füllstands umgeschaltet werden. Bei der Überwachung eines maximalen Füllstands muß eine Anzeige oder ein Schaltvorgang ausgelöst werden, wenn der zuvor freie Sensor von dem Füllgut bedeckt wird, wenn also die Sensorfrequenz unter die Schaltfrequenz fällt. Dagegen muß bei der Überwachung eines minimalen Füllstands eine Anzeige oder ein Schaltvorgang ausgelöst werden, wenn der zuvor bedeckte Sensor von dem Füllgut nicht mehr bedeckt ist, wenn also die Sensorfrequenz über die Schaltfrequenz ansteigt.

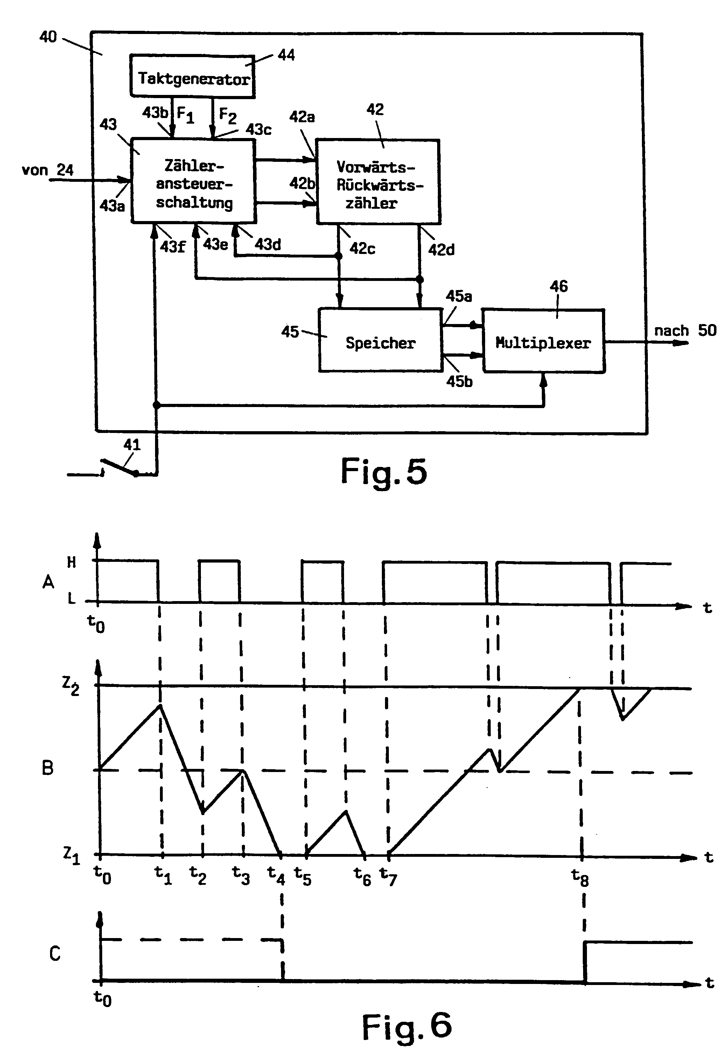

Fig. 5 zeigt ein Ausführungsbeispiel der Verzögerungsschaltung 40, bei der die Verzögerung durch einen Vorwärts-Rückwärts-Zähler 42 bestimmt wird. Diese Ausbildung ermöglicht es, die Verzögerungsschaltung vollständig aus digitalen Schaltungen aufzubauen, die mit den übrigen digitalen Schaltungen der Auswerteschaltung 20 kompatibel sind. Ferner kann mit dieser Ausführungsform auf einfache Weise eine asymmetrische Verzögerung erzielt werden, die beispielsweise 1 s beträgt, wenn das Sensorzustandssignal den Wert annimmt, der dem Zustand "frei" entspricht, und 0,4 s, wenn das Sensorzustandssignal den Wert annimmt, der dem Zustand "bedeckt" entspricht. Eine solche asymmetrische Verzögerung ist günstig, wenn das Füllgut eine Flüssigkeit ist, an deren Oberfläche Wellen entstehen können. Wenn solche Wellen eine Periode haben, die mit einer symmetrischen Verzögerungszeit zusammenfällt, kann ein instabiles Verhalten der Vorrichtung entstehen. Eine solche Instabilität wird durch eine asymmetrische Verzögerung vermieden.

Das vom Ausgang des Vergleichers 24 kommende unverzögerte Sensorzustandssignal wird einem Eingang 43a einer Zähleransteuerschaltung 43 zugeführt. Die Zähleransteuerschaltung 43 empfängt an zwei weiteren Eingängen 43b und 43c Taktimpulse mit zwei unterschiedlichen Taktfrequenzen von einem Taktgenerator 44. Beispielsweise kann die Frequenz F₁ der dem Eingang 43b zugeführten Taktimpulse 400 Hz und die Frequenz F₂ der dem Eingang 43c zugeführten Taktimpulse 1 kHz betragen, so daß sich die beiden Taktfrequenzen um den Faktor 2,5 unterscheiden. Die Zähleransteuerschaltung 43 überträgt in Abhängigkeit von dem Signalwert des am Eingang 43a anliegenden Sensorzustandssignals entweder die Taktimpulse mit der Frequenz F₁ oder die Taktimpulse mit der Frequenz F₂ zu einem Ausgang, der mit dem Takteingang 42a des Vorwärts-Rückwärts-Zählers 42 verbunden ist. An einem zweiten Ausgang, der mit dem Zählrichtungs-Steuereingang 42b des Vorwärts-Rückwärts-Zählers 42 verbunden ist, erscheint das unverzögerte Sensorzustandssignal. Wenn das Sensorzustandssignal den hohen Signalwert "H" hat, der dem Zustand "frei" des Sensors entspricht, schaltet es den Vorwärts-Rückwärts-Zähler 42 auf Vorwärtszählung, und es ermöglicht die Übertragung der Taktimpulse mit der niedrigen Taktfrequenz F₁ zum Takteingang 42a des Vorwärts-Rückwärts-Zählers 42. Wenn dagegen das Sensorzustandssignal den niedrigen Signalwert "L" hat, schaltet es den Vorwärts-Rückwärts-Zähler 42 auf Rückwärtszählung, und es ermöglicht die Übertragung der Taktimpulse mit der hohen Taktfrequenz F₂ zum Takteingang 42a des Vorwärts-Rückwärts-Zählers 42.

Der Vorwärts-Rückwärts-Zähler 42 hat zwei Ausgänge 42c und 42d, die mit zwei Eingängen eines Speichers 45 sowie mit zwei Steuereingängen 43d und 43e der Zähleransteuerschaltung 43 verbunden sind. Der Vorwärts-Rückwärts-Zähler 42 gibt am Ausgang 42c ein Signal ab, wenn er bei der Rückwärtszählung einen unteren Grenzzählerstand Z₁ erreicht, und er gibt am Ausgang 42d ein Signal ab, wenn er bei der Vorwärtszählung einen oberen Grenzzählerstand Z₂ erreicht. Vorzugsweise ist der untere Grenzzählerstand Z₁ der Zählerstand 0 und der obere Grenzzählerstand Z₂ der maximale Zählerstand, also beispielsweise der Zählerstand 4095 bei einem 12 Bit-Zähler.

Der Speicher 45 kann den einen oder den anderen von zwei Zuständen annehmen. Das vom Ausgang 42c des Vorwärts-Rückwärts-Zählers 42 gelieferte Signal bringt den Speicher 45 in den einen Zustand, beispielsweise den Zustand "0"; das vom Ausgang 42d des Vorwärts-Rückwärts-Zählers 42 gelieferte Signal bringt den Speicher 45 in den anderen Zustand, bei dem gewählten Beispiel also in den Zustand "1". Der Speicher 45 gibt an einem Ausgang 45a ein Signal ab, dessen Signalwert dem Zustand des Speichers entspricht, und an einem Ausgang 45b ein dazu komplementäres Signal. Der Speicher 45 kann also beispielsweise durch ein einfaches Flip-Flop gebildet sein.

Die beiden Ausgänge 45a und 45b des Speichers 45 sind mit zwei Eingängen eines Multiplexers 46 verbunden. Ein Steuereingang des Multiplexers 46 ist mit dem Schalter 41 verbunden. Je nach der Stellung des Schalters 41 überträgt der Multiplexer 46 entweder das vom Ausgang 45a oder das vom Ausgang 45b gelieferte Signal zu der Endstufen-Ansteuerschaltung 50; er wirkt also als einfacher Umschalter. Der Schalter 41 ist außerdem mit einem Steuereingang 43f der Zähleransteuerschaltung 43 verbunden.

Die Funktionsweise der Verzögerungsschaltung 40 von Fig. 5 wird anhand der Diagramme von Fig. 6 erläutert, wobei zunächst angenommen wird, daß der Schalter 41 offen ist und daß der Multiplexer 46 in diesem Fall das Signal vom Ausgang 45a zu der Endstufen-Ansteuerschaltung 50 überträgt. Das Diagramm A von Fig. 6 zeigt das vom Vergleicher 24 gelieferte Sensorzustandssignal, das Diagramm B zeigt die Änderung des Zählerstands im Vorwärts-Rückwärts-Zähler 42 zwischen den beiden Grenzzählerständen Z₁ und Z₂, und das Diagramm C zeigt das Ausgangssignal des Multiplexers 46, das der Endstufen-Ansteuerschaltung 50 zugeführt wird.

Im Diagramm A entspricht der hohe Signalwert "H" dem Zustand "frei" und der niedrige Signalwert "L" dem Zustand "bedeckt" des Sensors. Im Diagramm B ist angenommen, daß der Vorwärts-Rückwärts-Zähler 42 im Zeitpunkt t₀ gerade einen mittleren Zählerstand zwischen den beiden Grenzzählerständen Z₁ und Z₂ hat. Da das Sensorzustandssignal im Zeitpunkt t₀ den Signalwert "H" hat, ist der Vorwärts-Rückwärts-Zähler 42 auf Vorwärtszählung geschaltet, so daß sein Zählerstand mit der niedrigen Taktfrequenz F₁ ansteigt.

Im Zeitpunkt t₁ geht das Sensorzustandssignal vom Signalwert "H" auf den Signalwert "L", was zur Folge hat, daß die Zähleransteuerschaltung 43 den Vorwärts-Rückwärts-Zähler 42 auf Rückwärts zählung umschaltet und gleichzeitig dem Takteingang 42a die Taktimpulse mit der hohen Taktfrequenz F2 zuführt. Demzufolge verringert sich der Zählerstand des Vorwärts-Rückwärts-Zählers 42 mit größerer Geschwindigkeit als bei der Vorwärtszählung. Bevor der Zählerstand den unteren Grenzwert Z₁ erreicht, nimmt das Sensorzustandssignal im Zeitpunkt t₂ wieder den Signalwert "H" an, so daß zwischen den Zeitpunkten t₂ und t₃ wieder eine Vorwärtszählung mit der niedrigen Taktfrequenz F₁ erfolgt. Im Zeitpunkt t₃ beginnt wieder eine Rückwärtszählung mit der Taktfrequenz F₂, in deren Verlauf der untere Grenzzählerstand Z₁ im Zeitpunkt t₄ erreicht wird.

Beim Erreichen des unteren Grenzzählerstands Z₁ im Zeitpunkt t₄ gibt der Vorwärts-Rückwärts-Zähler 42 am Ausgang 42c ein Signal ab, das dem Speicher 45 zugeführt wird. Wenn der Speicher 45 vor dem Zeitpunkt t₄ bereits den Zustand "0" hatte, wie im Diagramm C von Fig. 6 in voller Linie dargestellt ist, bleibt dieser Zustand bestehen. Wenn dagegen der Speicher 45 vor dem Zeitpunkt t₄ den Zustand "1" hatte, wie im Diagramm C gestrichelt angedeutet ist, geht der Speicher 45 vom Zustand "1" in den Zustand "0", und dementsprechend ändert sich auch das Signal am Ausgang 45a, das vom Multiplexer 46 zur Endstufen-Ansteuerschaltung 50 übertragen wird. Dadurch wird angezeigt, daß der Sensor nunmehr von dem Füllgut bedeckt ist.

Das vom Vorwärts-Rückwärts-Zähler 42 am Ausgang 42c abgegebene Signal wird auch dem Steuereingang 43d der Zähleransteuerschaltung 43 zugeführt. Es bewirkt, daß die Zähleransteuerschaltung 43 dem Vorwärts-Rückwärts-Zähler 42 keine Zählimpulse zuführt, die eine weitere Rückwärtszählung verursachen würden. Der Vorwärts-Rückwärts-Zähler 42 bleibt also stehen, bis im Zeitpunkt t₅ wieder eine Vorwärts zählung eingeleitet wird. Wenn nach dieser Vorwärtszählung und anschließender Rückwärtszählung im Zeitpunkt t₆ wieder der untere Grenzzählerstand erreicht wird, gibt der Vorwärts-Rückwärts-Zähler 42 erneut ein Signal am Ausgang 42c ab, das jedoch keine Auswirkung auf den Zustand des Speichers 45 hat, da dieser bereits vorher im Zustand "0" war. Dagegen verhindert dieses Signal über die Zähleransteuerschaltung 43 wieder eine weitere Rückwärtszählung im Vorwärts-Rückwärts-Zähler 42, bis im Zeitpunkt t₇ wieder eine Vorwärtszählung eingeleitet wird.

Im Diagramm B von Fig. 6 ist dargestellt, daß durch die im Zeitpunkt t₇ eingeleitete Vorwärtszählung, mit kurzer Unterbrechung durch eine Rückwärtszählung, schließlich im Zeitpunkt t₈ der obere Grenzzählerstand Z₂ erreicht wird. Im Zeitpunkt t₈ gibt daher der Vorwärts-Rückwärts-Zähler 42 am Ausgang 42d ein Signal ab, das den Speicher 45 in den Zustand "1" umschaltet. Dementsprechend ändert sich auch das Ausgangssignal am Ausgang 45a, das vom Multiplexer 56 zur Endstufenansteuerschaltung 50 übertragen wird, um anzuzeigen, daß der Sensor wieder frei schwingt, also nicht mehr vom Füllgut bedeckt ist. Dieses Signal wird auch dem Steuereingang 43e der Zähleransteuerschaltung 43 zugeführt, um eine weitere Vorwärtszählung im Vorwärts-Rückwärts-Zähler 42 zu verhindern, bis wieder eine Rückwärtszählung eingeleitet worden ist.

Wenn der Schalter 41 geschlossen wird, bewirkt das dem Steuereingang 43f der Zähleransteuerschaltung zugeführte Signal eine Umkehrung der Einwirkung des Sensorzustandssignals auf die Zählrichtung des Vorwärts-Rückwärts-Zählers 42: der Vorwärts-Rückwärts-Zähler 42 zählt dann vorwärts, wenn das Sensorzustandssignal den Signalwert "L" hat, und er zählt rückwärts, wenn das Sensorzustandssignal den Signalwert "H" hat. Im Multiplexer 46 bewirkt das Schließen des Schalters 41, daß anstelle des am Ausgang 45a des Speichers 45 bestehenden Signals das am Ausgang 45b bestehende komplementäre Signal zur Endstufen-Ansteuerschaltung 50 übertragen wird.

Die Diagramme von Fig. 6 lassen erkennen, daß eine Änderung des Sensorzustandssignals nicht sofort zur Endstufenansteuerschaltung 50 übertragen wird, sondern mit einer Verzögerung, die mindestens gleich der Dauer des Durchlaufens des Zählbereichs zwischen den beiden Grenzzählerständen Z₁ und Z₂ bei der in der betreffenden Zählrichtung wirksamen Taktfrequenz ist, gegebenenfalls verlängert durch zwischenzeitliche Änderungen der Zählrichtung. Auf diese Weise werden sporadische Änderungen des Sensorzustandssignals unterdrückt, und bleibende Änderungen werden erst angezeigt, wenn sie für eine gewisse Zeitdauer bestätigt worden sind.

Wenn der Sensor 10 teilweise von dem Füllgut bedeckt ist, kann seine Eigenresonanzfrequenz einen Wert annehmen, der sehr nahe bei der Schaltfrequenz liegt, was zur Folge haben kann, daß die Schaltfrequenz bei im wesentlichen gleichbleibendem Füllstand häufig abwechselnd über- und unterschritten wird. Um in diesem Fall eine eindeutige Füllstandsanzeige zu erzielen, wird das von der Verzögerungsschaltung 40 gelieferte verzögerte Sensorzustandssignal auch einem Steuereingang 28d des Addierers 28 zugeführt. Es bewirkt, abhängig von seinem Signalwert, die Addition bzw. die Subtraktion einer zusätzlichen digitalen Zahl, wodurch die die Schaltfrequenz darstellende digitale Zahl zur Erzielung einer Schalthysterese verändert wird.

Schließlich enthält die Auswerteschaltung 20 noch eine Sensorparameter-Überwachungsschaltung 51, die einerseits die vom Speicher 23 gelieferte digitale Zahl, die die Sensorfrequenz anzeigt, und andererseits die vom Analog-Digital-Wandler 27 gelieferte digitale Zahl empfängt. Aufgrund dieser Zahlen überwacht die Sensorparameter-Überwachungsschaltung 51 den Sensorschwingbereich und den Kenngrößenbereich sowie die Leitungen zwischen dem Sensor und der Auswerteschaltung. Wenn eine der digitalen Zahlen außerhalb eines vorgegebenen Bereichs liegt oder wenn das Fehlen einer dieser Zahlen eine Leitungsunterbrechung anzeigt, schickt die Sensorparameter-Überwachungsschaltung ein Alarmsignal zu der Endstufen-Ansteuerschaltung, das von dieser zu der ausgewählten Endstufe weitergeleitet wird und dort anzeigt, daß ein Fehler vorliegt.

Ein wesentlicher Vorteil der Auswerteschaltung 20 besteht darin, daß sie ausschließlich aus digitalen Schaltungen besteht. Sie kann daher als integrierter Baustein hergestellt werden.

## Patentansprüche

1. Vorrichtung zur Feststellung und/oder Überwachung eines vorbestimmten Füllstands in einem Behälter, mit einem Sensor, der auf der Höhe des zu überwachenden Füllstands so am Behälter angeordnet ist, daß er mit dem Füllgut in Berührung kommt, wenn dieses den vorbestimmten Füllstand erreicht, einer Erregungsanordnung, die den Sensor zu mechanischen Schwingungen bei seiner Eigenresonanzfrequenz anregt, und mit einer Auswerteschaltung zur Auslösung von Anzeige- und/oder Schaltvorgängen in Abhängigkeit davon, ob die Frequenz der mechanischen Schwingungen des Sensors eine Schaltfrequenz über- oder unterschreitet, dadurch gekennzeichnet, daß dem Sensor ein elektrisches Schaltungselement zugeordnet ist, das eine Kenngröße hat, deren Wert in eindeutiger Beziehung zur Eigenresonanzfrequenz des Sensors steht, daß die Auswerteschaltung eine Anordnung zur Umsetzung der Frequenz der mechanischen Schwingungen des Sensors in eine erste digitale Zahl, eine Anordnung zur Umsetzung des Wertes der Kenngröße des Schaltungselements in eine zweite digitale Zahl sowie eine Addierschaltung enthält, die durch Addition einer festen Grundzahl zu der zweiten digitalen Zahl eine Summenzahl bildet, die die Schaltfrequenz angibt, und daß die Auswerteschaltung einen Vergleicher enthält, der an einem ersten Eingang die erste digitale Zahl und an einem zweiten Eingang die zweite digitale Zahl empfängt und an seinem Ausgang ein Sensorzustandssignal liefert, das in Abhängigkeit vom Ergebnis des Vergleichs der beiden digitalen Zahlen den einen oder den anderen von zwei Signalwerten annimmt.

2. Vorrichtung nach Anspruch 1, dadurch gekennzeichnet, daß dem Vergleicher eine Verzögerungsschaltung nachgeschaltet ist, die dem vom Vergleicher gelieferten unverzögerten Sensorzustandssignal eine vorgegebene Verzögerung erteilt und am Ausgang ein verzögertes Sensorzustandssignal liefert, das zur Auslösung der Anzeige- und/oder Schaltvorgänge verwendet wird.

3. Vorrichtung nach Anspruch 2, dadurch gekennzeichnet, daß die von der Verzögerungsschaltung erteilte Verzögerung in Abhängigkeit davon, ob das unverzögerte Sensorzustandssignal den einen oder den andernen Signalwert hat, unterschiedlich groß ist.

4. Vorrichtung nach Anspruch 3, dadurch gekennzeichnet, daß die Verzögerungsschaltung durch einen Vorwärts-Rückwärts-Zähler gebildet ist, dessen Zählrichtung durch das unverzögerte Sensorzustandssignal gesteuert wird und der in Abhängigkeit von der Zählrichtung mit unterschiedlichen Taktfrequenzen betrieben wird.

5. Vorrichtung nach einem der Ansprüche 1 bis 4, dadurch gekennzeichnet, daß die Auswerteschaltung eine Sensorparameter-Überwachungsschaltung enthält, die die erste und die zweite digitale Zahl empfängt und ein Alarmsignal liefert, wenn eine der digitalen Zahlen außerhalb eines vorbestimmten Bereichs liegt.

## Claims

1. A device for determining and/or monitoring a predetermined level of contents in a container, comprising a sensor which is so arranged on the container at the height of the contents level to be monitored that it comes into contact with the contents when the same reach the predetermined level, an exciting arrangement which excites the sensor to mechanical vibrations at its natural resonant frequency, and an evaluating circuit for causing display and/or switching operations dependent on whether the frequency of the mechanical vibrations of the sensor is above or below a switching frequency, characterized in that an electrical circuit element is associated with the sensor, which electrical circuit element has a characteristic parameter whose value bears an unambiguous relationship to the natural resonant frequency of the sensor, that the evaluating circuit comprises an arrangement for the conversion of the frequency of the mechanical vibrations of the sensor into a first digital number, an arrangement for the conversion of the value of the characteristic parameter of the circuit element into a second digital number, and an adding circuit which by addition of a fixed basic number to the second digital number forms a summated number which indicates the switching frequency, and in that the evaluating circuit comprises a comparator which at a first input receives the first digital number, at a second input receives the second digital number and at its output supplies an undelayed sensor condition signal which in accordance with the result of the comparison between the two digital numbers assumes the one or the other of two signal values.

2. The device as claimed in claim 1, characterized in that a delay circuit is connected with the output of the comparator and imparts a predetermined delay to the undelayed sensor condition signal supplied by the comparator and at the output supplies a delayed sensor condition signal, which is employed for triggering the display and/or switching operations.

3. The device as claimed in claim 2, characterized in that the delay imparted by the delay circuit is of different magnitude in accordance with whether the undelayed sensor condition signal has the one or the other signal value.

4. The device as claimed in claim 3, characterized in that the delay circuit is constituted by an up-down counter, whose direction of count is controlled by the undelayed sensor signal and which in a manner dependent of the direction of count is operated with different clock frequencies.

5. The device as claimed in any one of claims 1 to 4, characterized in that the evaluating circuit comprises a sensor parameter monitoring circuit, which receives the first and the second digital numbers and supplies an alarm signal when one of the digital numbers is outside a predetermined range.

## Revendications

1. Dispositif destiné à constater et/ou à surveiller un niveau de remplissage prédéterminé d'un réservoir, comportant un capteur disposé sur le réservoir à la hauteur du niveau de remplissage à surveiller, de telle façon qu'il entre en contact avec la matière de remplissage lorsque celle-ci atteint le niveau de remplissage prédéterminé, comportant un dispositif d'excitation qui imprime au capteur des oscillations mécaniques à sa propre fréquence de résonance, et comportant un circuit analyseur destiné à déclencher des processus d'affichage et/ou de commutation en fonction du fait que la fréquence des oscillations mécaniques du capteur est inférieure ou supérieure à une fréquence de commutation, caractérisé en ce qu'il est associé au capteur un élément de circuit électrique ayant une caractéristique dont la valeur est en relation directe avec la fréquence de résonance propre du capteur, en ce que le circuit analyseur comprend un dispositif destiné à convertir la fréquence des oscillations mécaniques du capteur en un premier nombre numérique, un dispositif destiné à convertir la valeur de la caractéristique de l'élément de circuit en un deuxième nombre numérique, ainsi qu'un circuit additionneur qui, par addition d'un chiffre de base fixe au deuxième nombre numérique, forme une somme indiquant la fréquence de commutation, et en ce que le circuit analyseur comprend un comparateur qui reçoit à une première entrée le premier nombre numérique et à une deuxième entrée le deuxième nombre numérique et fournit à sa sortie un signal d'état de capteur qui prend l'une ou l'autre de deux valeurs de signal, en fonction du résultat de la comparaison des deux nombres numériques.

2. Dispositif suivant la revendication 1, caractérisé en ce qu'un circuit de retard est monté en aval du comparateur, ledit circuit de retard affectant un retard prédéfini au signal d'état de capteur sans retard fourni par le comparateur et fournissant à sa sortie un signal d'état de capteur retardé qui est utilisé pour déclencher les processus d'affichage et/ou de commutation.

3. Dispositif suivant la revendication 2, caractérisé en ce que le retard communiqué par le circuit de retard a une grandeur différente en fonction du fait que le signal d'état de capteur sans retard a l'une ou l'autre valeur de signal.

4. Dispositif suivant la revendication 3. caractérisé en ce que le circuit de retard est formé par un compteur avant-arrière dont le sens de comptage est commandé par le signal d'état de capteur sans retard et qui est actionné à différentes fréquences de cycle, en fonction du sens de comptage.

5. Dispositif suivant l'une des revendications 1 à 4, caractérisé en ce que le circuit analyseur comprend un circuit de surveillance des paramètres de capteur qui reçoit les premier et deuxième nombres numériques et fournit un signal d'alarme lorsque l'un des nombres numériques se trouve en dehors d'une plage prédéterminée.
